# EUROPEAN PATENT APPLICATION

(11) **EP 1 712 888 A1**
(43) Date of publication of application: **18.10.2006**
(21) Application number: 05102821.5
(22) Date of filing: 11.04.2005
(51) Int. Cl.: G01M 11/00, G01B 11/00, G01S 5/00, G01S 17/00, G01S 17/02, G01S 17/06, G01S 17/42, G01S 17/58, G01S 17/10, G01S 17/08

(54) **Time-of-flight measurement using pulse sequences**

(71) Applicant: Agilent Technologies Inc, Palo Alto, 5 94306 (US)
(72) Inventor: BELLER, Josef, 72074, Tübingen (DE)
(74) Representative: Neuerburg, Gerhard

(57) **Abstract**

The invention relates to determining the time-of-flight of a device under test (105, 202), wherein a return signal (P2) returning from the device under test (105, 202) in response to the probing signal (P1) comprising a sequence of pulses according to a first code sequence (C1) is detected and a second code sequence (C2) from the detected return signal (P2) is derived, and a correlation function (CF) is determined by correlating the first code sequence (C1) and the second code sequence (C2), a main peak (MP) is identified, a time position of the main peak (MP) is determined and the time-of-flight is derived from the time position.

## Description

### BACKGROUND ART

The present invention relates to determining the time-of-flight of a device under test.

One significant physical property of a device under test is the propagation delay or time-of-flight between the emission of a probing signal and the arrival of the probing signal. Propagation delay measurements are often used for the determination of a distance. If the probing signal's velocity in the propagation medium is known, the distance can be derived from the time-of-flight. Depending on the transmission media the probing signal typically is an electrical or an optical signal.

A known method for a distance determination is based on the measurement of the so-called time-of-flight or round trip time of an optical signal from an optical source to a target and back from the target. Such a distance measuring device or range finder is disclosed in US 6,108,071.
In an optical system the maximum distance that can be covered by the above-described distance measurement is dependent on the maximum power of the emitted light pulse, the beam divergence, the attenuation of the propagation medium, the reflectivity of the target and the sensitivity of the receiver or system.

### DISCLOSURE OF THE INVENTION

It is an object of the invention to provide an improved time-of-flight determination. The object is solved by the independent claims. Preferred embodiments are shown by the dependent claims.

According to an embodiment of the invention, a probing signal comprising a sequence of pulses according to a first code sequence is emitted from a measurement system into a device under test. A signal returning from the device under test in response to the probing signal is detected by a detector of the measurement system and a second code sequence is retrieved from the detected returning signal. The first code sequence and the second code sequence are correlated by a signal processor for determining a correlation function. The main peak of the correlation function is identified and the time position of the main peak is evaluated.

The accuracy, speed and distance range of propagation delay measurements can be significantly improved by launching a code sequence as probing signal rather than a single pulse. The correlation result of probing signal and return signal which is superimposed by noise shows a strong main peak resembling a Dirac function that is much higher than a response to a single impulse and much higher than any maximum of the correlation between the first code sequence and the noise signal, if the first code sequence is properly chosen. Despite a limited output power, it is possible to transmit more energy, thus extending the reach of the measurement system, while still keeping the spatial resolution.

In an embodiment, an optical time domain reflectometer (OTDR) is used for an optical time-of-flight measurement. In an optical system the transmitter device, which typically is a laser diode, has a strong impact on the overall cost. Besides costs, laser safety regulations, or system damage levels, etc. practically limit the optical output power. One dominant effect of wide range optical systems is the attenuation that the probing signal experiences on the transmission channel. This can lead to poor signal to noise ratios of the received signal. The present invention allows for significantly increasing the signal to noise ration without the need to increase the signal source power. Further, as the signal source power does not need to be increased, nonlinear effects in the transmission line or receiver can be avoided.

In a further embodiment, the chromatic dispersion of an optical fiber is determined by measuring the time-of-flight at different wavelengths of the probing signal and determining the round trip time differences. Therefore, the relative time positions of the main peaks of the correlation functions to each other are determined. The first derivative of the relative group delay then gives the fiber's chromatic dispersion.

In a further embodiment, the probing signal is based on so-called pseudo random codes. Pseudo random codes allow for easy processing, whereby the autocorrelation function always shows some side lobes. The ratio between the maximum peak level and the noise level after calculating the correlation product is improved, so that an accurate identification of the main peak is possible even in the case that the noise level is in the range or even higher that the signal level.

In a further embodiment, the measurement quality is further increased by using so-called complementary code sequences, where through summing up the respective auto-correlation products any side lobes cancel out perfectly, at least in a perfectly linear transmission system.

In a further embodiment, the first code sequence is high pass filtered and used as a base for the probing signal, wherein the second code recovered from the returning signal is low pass filtered and wherein the high pass filtering and the low pass filtering are complementary to each other.

The invention can be partly or entirely embodied or supported by one or more suitable software programs, which can be stored on or otherwise provided by any kind of data carrier, and which might be executed in or by any suitable data processing unit. Software programs or routines are preferably applied to the signal processor of the measurement system or a main processor that controls the steps of the measurement.

### BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawings. Features that are substantially or functionally equal or similar will be referred to with the same reference signs.

Fig. 1 shows a schematic measurement setup with an optical measurement unit and a device under test,

Fig. 2 shows an alternative embodiment of the measurement setup,

Fig. 3 shows an exemplary pulse code provided to the device under test,

Fig. 4 shows the autocorrelation function of the pulse code of Fig.3, and

Fig. 5 shows an exemplary power density spectrum of a code with an emphasis to high frequencies.

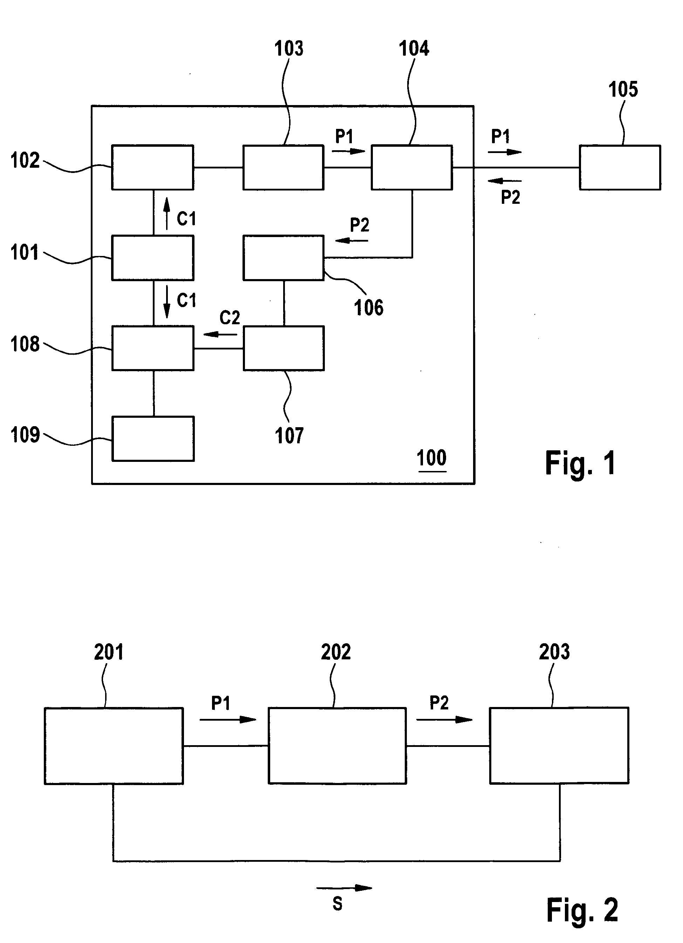

Fig. 1 shows an exemplary block diagram of an optical measurement setup with an optical time domain reflectometer (OTDR) 100 and a device under test (DUT) 105. The OTDR 100 comprises a code generator 101, a laser driver 102, a light source 103 preferably realized as a laser transmitter, a bidirectional optical coupler 104, an optical detector 106, an Analog-to-Digital converter (ADC) 107, a digital signal processor (DSP) 108, and a main processor 109. The optical coupler connects the laser transmitter 103, the DUT 105, and the detector 106.

A first code or digital sequence C1 is stored in a memory (ROM) and fetched by the code generator 101. The code generator 101 provides a control signal to light source driver 102 so that light source driver 102 provides electrical pulses to light source 103 according to the first code C1. The electrical pulses form a determined digital sequence, causing light source 103 to generate a sequence of light pulses in accordance with the sequence of electrical pulses, thus providing an optical probing signal P1 according to the first code C1 to the optical coupler 104. The optical coupler 104 directs the probing signal P1 received from the laser transmitter to the DUT 105.

DUT 105, e.g. an optical fiber with a reflective end, returns a fraction of the probing signal P1 back to the optical coupler 104 that directs the returned signal P2 to the detector 106. The detector generates an electrical signal according to the detected optical power of the detected light P2. Not shown here, this electrical signal is low-pass filtered and sampled for generating a second code sequence before passing to the DSP 108. The DSP correlates this returning code C2 with the transmitted code C1, identifies the main peak and determines a time shift between the main peak of the autocorrelation function and the emission time of the first code C1.

Also, the correlation might be performed by a finite impulse response (FIR) filter in the DSP when one of the two code sequences to be correlated is time inverted.

In an ideal case without any occurrence of noise, the transmitted code C1 and the returned code C2 distinguish from each other only by constant value due to the attenuation of the returning signal. In this case, the correlation function is equal to an autocorrelation function of the transmitted code C1 multiplied by a constant factor. The autocorrelation function shows a strong main peak that corresponds to the sum of the multiplied pulse values, many times higher than the square of a single pulse.

In a real environment the transmission medium and/or the receiver typically are exposed to noise. This noise can be regarded as a superposition of a random signal to the return signal. The correlation of the first and second code sequences C1 and C2 is thus equivalent to an autocorrelation of the first code C1 and a correlation of the first code with the noise signal. If the first code sequence is properly chosen the autocorrelation maximum peak is much higher than any maximum of the correlation between the first code sequence C1 and the noise signal. Examples for sequences to be chosen for the probing signal P1 are digital pseudo random codes or so-called complementary codes.

Therefore a vastly improved signal-to-noise ratio is achievable under the same conditions. The improved SNR allows for:

reducing the measurement time,

increasing the applicable measurement distance, and/or

improving spatial resolution through a wider receiver bandwidth.

The autocorrelation function of a digital pseudo random code shows a maximum at zero shift. The inevitable side lobes of such an auto-correlation do not render such codes unsuitable like in backscatter measurements, because only the spatial position of the strong main peak needs to be determined accurately.

Complementary codes, in particular Golay codes, show at least under ideal conditions, no side lobes in the sum of their respective autocorrelation products. Further details of using code sequences for OTDR applications are e.g. described in US 5,000,568 and US 4,968,880. Therefore, using complementary codes as probing signals, at least one pair of probing signals with complementary codes are emitted to the DUT 105, the returning signals are each correlated with the corresponding probing signal and the result are added.

In an embodiment of the invention the time-of-flight of an optical DUT, e.g. an optical fiber is determined by evaluating an optical return signal P2 from a far end reflection arriving after a round trip time, which depends on the DUT property, e.g. chromatic dispersion.

A far end reflector can be a passive reflector, e.g. a mirror.

Alternatively, the far end reflector can be realized as an active element, e.g. an opto-electrical repeater that receives the probing signal P1 and generates a return signal P2 in response the probing signal P1. The target generates the return signal P2 with a known time delay in relation to the reception of the probing signal. The signal detector takes this time delay into account by subtracting this time from the time determined by the correlation. This allows for further increasing the measuring distance and/or the measuring accuracy.

For determining the chromatic dispersion, the laser transmitter 103 might comprise a plurality of laser diodes, e.g. four laser diodes, operating at different wavelengths. Time-of-flight measurements are carried out for each wavelength, either simultaneously or consecutively. This allows for differential time-of-flight measurements by evaluation the different transmission times, thus allowing for determining the chromatic dispersion of the DUT. Instead of measuring the absolute transmission times and calculating the time differences for determining the chromatic dispersion, the relative time positions of the main peaks of the each correlated results can determined, if the probing signals are all emitted at the same time.

Instead of using a plurality of laser diodes, a tunable laser might be used for a determination of the chromatic dispersion by subsequent measurements at different wavelength.

Fig.2 shows an alternative measurement setup with a dual ended DUT 202. An optical transmitter 201, comprising a code generator, a laser driver, and a light source not shown here, is optically connected to an input of the dual ended DUT 202. An output of the dual ended DUT 202 is optically connected to an optical receiver 203. The optical receiver comprises, not shown here an optical detector, an ADC and a DPU. The optical transmitter emits a probing signal, e.g. the probing signal P1 of Fig.1 into the dual ended DUT 202. The dual ended DUT returns a portion of the light as returned signal P2 to the receiver. Similar to Fig. 1, the DSP performs a correlation of the first and second code, receiving a synchronization signal S from the optical transmitter 201 comprising the information of the transmission start time of the first code C1.

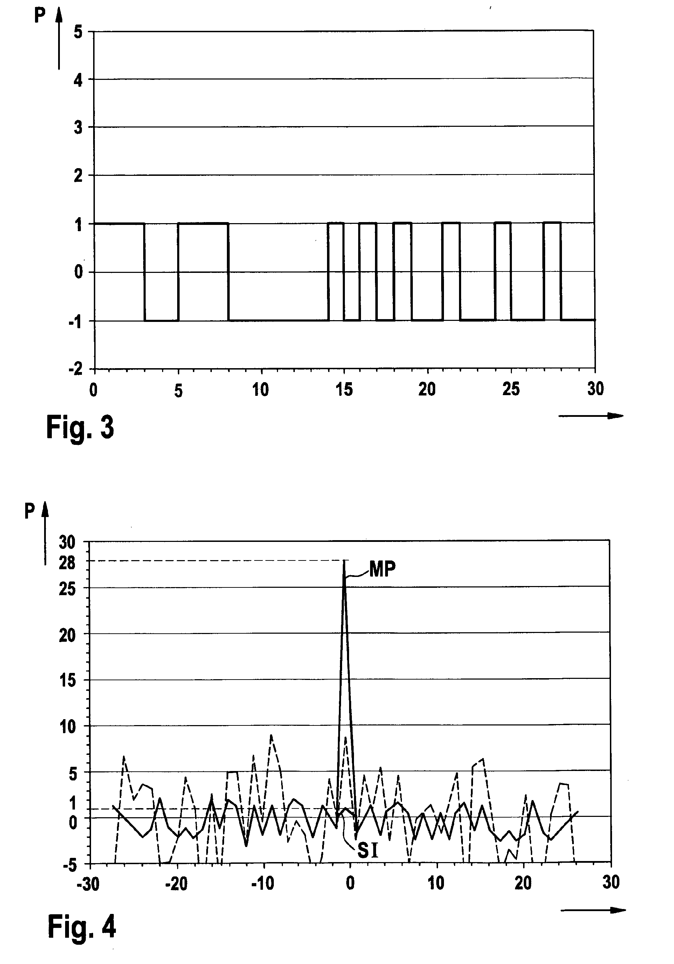

Fig. 3 shows a graphical representation of a normalized power P over a normalized time T of an exemplary probing signal P1 based on the digital pseudo random code sequence {+1+1+1-1-1+1+1+1-1-1-1-1-1-1+1-1+1-1 +1-1-1 +1-1-1 +1-1-1 +1}. Each time unit corresponds to the inverse of the data rate of the probing signal. In this example, the probing signal shows a length of 28 time units. The probing signal P1 exemplary shows an ideal rectangular shape, with a pulse width corresponding to one time unit. As an example for an optical probing signal, the duration of one time unit is 10 nano seconds.

Fig. 4 shows a diagram with a normalized power P of the autocorrelation function of the pseudo random sequence of Fig. 3 over the normalized time T. The power is normalized to the power of one single pulse. The main peak MP of the autocorrelation function shows a value of 28 that corresponds to the power of the probing signal P1. This power is 28 times higher than that of a single impulse SI that is showing a maximum value of 1 depicted here for comparison reason. The maximum side lobes do not exceed the value of 2. Further an exemplary noise signal SN is shown having maximum values of almost 10 thus exceeding the pulses of the code sequence by a factor of 10. However, as can be seen in the diagram, the maximum values of the noise signal are still significantly inferior compared to the maximum value of the autocorrelation function. This illustrates the superior signal-to-noise ratio (SNR) of the autocorrelation main peak versus the single impulse signal.

The SNR can be further improved by choosing codes with higher code length L, e.g. codes with hundreds of bits can be generated. A theoretical analysis shows that a code with length L leads to a SNR, which is to the square root of L higher than that of a single pulse measurement. This is valid under the assumption that the frequency spectrum of the (pseudo random) code equals that of white noise, i.e. is approximately constant.

By modifying codes with a substantially constant spectrum, e.g. pseudo random codes, in a way that their spectrum dominates in the higher frequency range, further improvements in SNR can be achieved through the resulting noise shaping effect during the autocorrelation process.

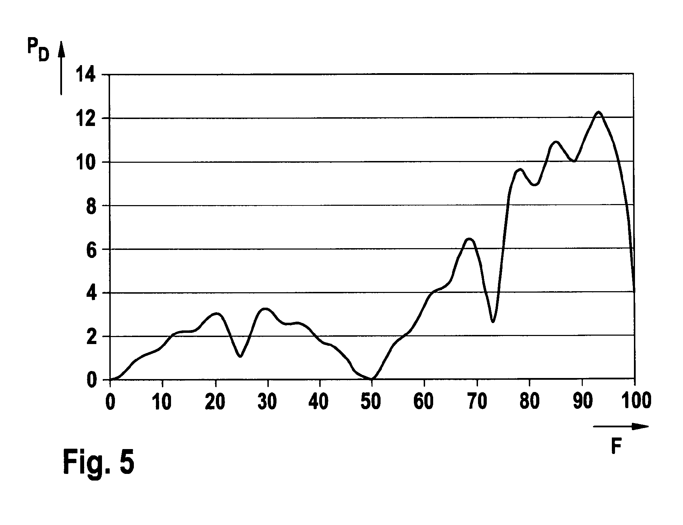

Fig. 5 shows a power density spectrum PD of an exemplary modified probing signal with an emphasis to high frequencies over a normalized frequency F. The frequency is normalized to 100 times half the sampling frequency; for the above example of a sampling frequency of 10 ns, the normalized frequency of 100 corresponds to 50 Mega Hertz (MHz).

Such modification can be performed by high pass filtering or bit inversion of the first code C1 before provision to the laser driver 102 or by storing a corresponding modified code preferably together with the first code C1. The second code sequence retrieved from the returned signal P2 is low pass filtered by a low pass filter that is complementary to the pass filtering, before being correlated with the first code sequence.

## Claims

1. A method of determining a the time-of-flight of a device under test (105, 202), comprising the steps of:
• detecting a returning signal (P2) returning from the device under test (105, 202) in response to a probing signal (P1) comprising a sequence of pulses according to a first code sequence (C1), and deriving a second code sequence (C2) from the detected returning signal (P2),
• determining a correlation function (CF) by correlating the first code sequence (C1) and the second code sequence (C2) and identifying a main peak (MP) of the correlation function (CF), and
• determining a time position of the main peak (MP).

2. The method of claim 1, wherein the device under test (105, 202) is an optical fiber and wherein an optical time domain reflectometer is used for the time-of-flight determination.

3. The method of claim 2, wherein a plurality of first light signals (P1) with different wavelengths are emitted into the optical fiber (105, 202), a plurality of corresponding returning signals (P2) are detected, a plurality of corresponding correlation functions are performed between the code sequences of each pair of probing and returning signal (P1, P2), and a chromatic dispersion property of the optical fiber (105, 202) is determined on the base of the relative time positions of the main peaks of the correlation functions.

4. The method of claim 1 or any one of the above claims, wherein the first code sequence (C1) shows a substantially uniform frequency spectrum, so that a corresponding autocorrelation function shows a main peak (MP) that is significantly higher than any other peak of the autocorrelation side lobes.

5. The method of claim 4, wherein the first code sequence (C1) is a pseudo random noise sequence.

6. The method of claim 4, wherein al least two probing signals (P1) based on complementary codes are emitted such that both corresponding correlation function have substantially complementary side lobes, and wherein a resulting correlation function is determined by the adding both correlation functions, so that the side lobes substantially cancel.

7. The method of claim 6, wherein the complementary codes are Golay codes.

8. The method of claim 1 or any one of the above claims, wherein the first code sequence is high pass filtered and used as a base for the probing signal (P1), wherein the second code (P2) recovered from the returning signal (P2) is low pass filtered and wherein the high pass filtering and the low pass filtering are complementary to each other.

9. The method of claim 1 or any one of the above claims, wherein the returning signal (P2) at least partly comprises a signal generated in response to the portion of the probing signal (P1) received at a far end of the device under test (105, 202).

10. The method of claim 9, wherein said signal generated in response to the portion is generated actively with a known time delay in relation to receiving the probing signal (P1).

11. A software program or product, preferably stored on a data carrier, for controlling the steps of claim 1 or any one of the above claims, when run on a data processing system such as a computer.

12. A measurement system (100, 201, 203) for determining the time-of-flight of a device under test (105, 202), comprising:
• a signal detector adapted for detecting a returning signal (P2) returning from the device under test (105, 202) in response to a probing signal (P1) comprising a sequence of pulses according to a first code sequence (C1) and for deriving a second code sequence (C2) from the detected returning signal (P2), and
• a signal processor adapted for determining a correlation function (CF) by correlating the first code sequence (C1) and the second code sequence (C2), identifying a main peak (MP), determining a time position of the main peak (MP) and deriving the time-of-flight from the time position of the main peak (MP).
